## Europäisches Patentamt
## European Patent Office
## Office européen des brevets

(11) Veröffentlichungsnummer: **0 180 967**
**B1**

(12) **EUROPÄISCHE PATENTSCHRIFT**

(45) Veröffentlichungstag der Patentschrift: **05.09.90**

(51) Int. Cl.⁵: **H 02 M 7/48,** H 02 M 5/27

(21) Anmeldenummer: **85114083.0**

(22) Anmeldetag: **05.11.85**

(54) **Verfahren zum Betrieb eines Wechselrichters zur Erzeugung einer niederfrequenten Wechselspannung aus einer Gleichspannung, und Schaltungsanordnung zur Durchführung des Verfahrens.**

(30) Priorität: **09.11.84 DE 3440926**

(43) Veröffentlichungstag der Anmeldung:
**14.05.86 Patentblatt 86/20**

(45) Bekanntmachung des Hinweises auf die
Patenterteilung:
**05.09.90 Patentblatt 90/36**

(84) Benannte Vertragsstaaten:
**BE FR GB IT NL**

(56) Entgegenhaltungen:
**US-A-4 281 374**

(73) Patentinhaber: **ABB CEAG Licht- und
Stromversorgungstechnik GmbH
Senator-Schwarz-Ring 26
D-4770 Soest (DE)**

(72) Erfinder: **Klaas, Wilfried, Ing. grad.
Jägerstrasse 12
D-4773 Brüllingsen (DE)**
Erfinder: **Prasuhn, Jürgen
Hattroper Weg 19
D-4770 Soest (DE)**

(74) Vertreter: **Rupprecht, Klaus, Dipl.-Ing. et al
c/o CEAG Licht- und Stromversorgungstechnik
GmbH ZPT Postfach 100351
D-6800 Mannheim 1 (DE)**

**Beschreibung**

Die Erfindung betrifft ein Verfahren nach dem Oberbegriff des Anspruchs 1. Sie betrifft ferner eine Schaltungsanordnung zur Durchführung des Verfahrens.

Es gibt eine Reihe von Verfahren. Mit denen mittels eines Wechselrichters aus einer Gleichspannung ein Sinus-Wechselstrom für eine bestimmte Last erzeugt wird. Beispielsweise ist ein sogenanntes Step-Wave-Verfahren bekannt geworden, bei der auf der Primärseite eine Gegentaktstufe einen mit einer Mittelanzapfung versehenen Transformator ansteuert, und somit auf der Sekundärseite eine Rechteckspannung erzeugt. Dabei ist die Sekundärwicklung unsymmetrisch aufgebaut, weswegen die in Reihe geschalteten Wicklungen unterschiedliche Windungszahlen und damit auch unterschiedliche Ausgangsspannungen aufweisen. Mit Hilfe dieser beiden Spannungen läßt sich eine dem Sinus angenäherte Ausgangsspannung erzeugen, wobei die Thyristoren auf der Sekundärseite so anzusteuern sind, daß eine sogenannte Treppenkurve erzeugt wird, die der Sinusfuktion entspricht. Um eine möglichst gleichmäßige Sinuskurve zu erhalten, müßte die Anzahl der Stufen erhöht werden, was aber bedeutet, daß mehr als zwei unterschiedliche Rechteckspannungen erzeugt werden müssen. Dadurch wird der Aufwand für die Steuerung recht hoch. Es ist weiterhin bekannt, eine Sinus-Wechselspannung durch eine Pulsdauermodulation zu erhalten. Bei dieser Modulationsart wird die Impulsdauer verändert, wobei die Pulsamplitude, die Pulsfrequenz und die Phase unverändert bleiben und nur das Tastverhältnis sich ändert. Bei dieser Anordnung wird die Pulsdauer auf der Primärseite des Leistungstransformators moduliert, um auf der Sekundärseite eine entsprechend gesteuerte sinusförmig Spannung zu erhalten.

Da bei diesen bekannten Verfahren die Sinusfunktion auf der Primärseite des Leistungstransformators erzeugt wird, benötigt man schwere und voluminöse Bauteile der Niederfrequenztechnik, entweder zur direkten Umwandlung wie beim Gegentaktwandler, oder aber auch bei Schaltungen, die zunächst die Gleichspannung in eine höherfrequente Wechselspannung umwandeln, wobei dann zusätzlich noch zur Aussiebung der Grundwelle ebenfalls entsprechend niederfrequente Bauelemente erforderlich werden.

Ein Verfahren zum Betrieb eines Wechselrichters der eingangs genannten Art ist aus der US-A 4 281 374 bekannt geworden. Dort ist eine Schaltungsanordnung dargestellt, die eine Wechselspannung mittels pulsdauermodulation erzeugt, wobei eine eingangsseitige Gleichspannung in eine hochfrequente Rechteckspannung umgewandelt wird. Bei der Pulsdauermodulation wird das Tastverhältnis verändert und die Frequenz gleich bleibt. Die oben beschriebenen Probleme und Nachteile gelten hierfür ebenfalls.

Aufgabe der Erfindung ist es, ein Verfahren zum Betrieb eines Wechselrichters anzugeben, bei dem schwere niederfrequente Bauelemente nicht erforderlich sind.

Diese Aufgabe wird erfindungsgemäß gelöst durch die kennzeichnenden Merkmale des Anspruchs 1.

Die Schaltungsanordnung, bei der erfindungsgemäß das Verfahren durchgeführt werden kann, ist den Ansprüchen 5 und 6 zu entnehmen.

Weitere vorteilhafte Ausgestaltungen der Erfindung sind den weiteren Unteransprüchen zu entnehmen.

Das erfindungsgemäße Verfahren wird bei Wechselrichtern angewandt, die in der Notstromversorgung von Verbrauchern, die nur mit Anschlußbedingungen der allgemeinen Stromversorgung betrieben werden können, z.B. 220 V und 50 Hz, eingesetzt werden. Es wird ferner dort angewandt, wo eine unterbrechungsfreie Notstromversorgung z.B. für Metalldampfentladungslampen erforderlich wird, die nach kurzer Netzunterbrechung verlöschen und erst nach einer längeren Abkühlungsphase wiedergezündet werden können, oder für andere Verbraucher, die unterbrechungsfrei betrieben werden müssen. Darüberhinaus wird der Wechselrichter, der mit dem erfindungsgemäßen Verfahren betrieben wird, als elektronische Konstantspannungsquelle verwendet. Bisher wurden derartige konstante Sinuswechselspannungen im allgemeinen durch magnetische Spannungskonstanthalter (nach dem Ferroresonanzprinzip) realisiert, wobei als Ausnahme die sogenannten rotierenden Systeme anzusehen waren. Bei derartigen Spannungskonstanthaltern waren zwar wenige Bauteile erforderlich und die Zuverlässigkeit war auch groß; eine konstante Ausgangsspannung aber konnte nur bei konstanter Eingangsfrequenz und sinusförmiger Eingangsspannung erzeugt werden. Demgemäß waren bei derartigen Spannungskonstanthaltern im Gegensatz zu der erfindungsgemäßen Ausführung große Volumina und schwere Bauelemente wegen der 50-Hz-Technik erforderlich.

Wenn darüberhinaus bei der erfindungsgemäßen Lösung für die Regelungsaufgaben ein Mikroprozessor eingesetzt wird, so lassen sich durch Änderung der Referenzspannung die Spannungen, Frequenzen und Kurvenformen in weiten Grenzen vorgeben, und auch während des Betriebs ändern. Weiterhin ist es möglich, die Funktion des Wechselrichters mit dem Mikroprozessor zu überwachen.

Anhand der Zeichnung in der ein Ausführungsbeispiel der Erfindung dargestellt ist, soll die Erfindung näher erläutert und beschrieben werden.

Es zeigen:

Figur 1 eine Schaltungsanordnung, in schematischer Darstellung, anhand der das erfindungsgemäße Verfahren erläutert werden soll,

Figur 2 Spannungs-Zeitdiagramme der unterschiedlichen Komponenten, und

Figur 3 eine Schaltungsanordnung für die Steuereinheit.

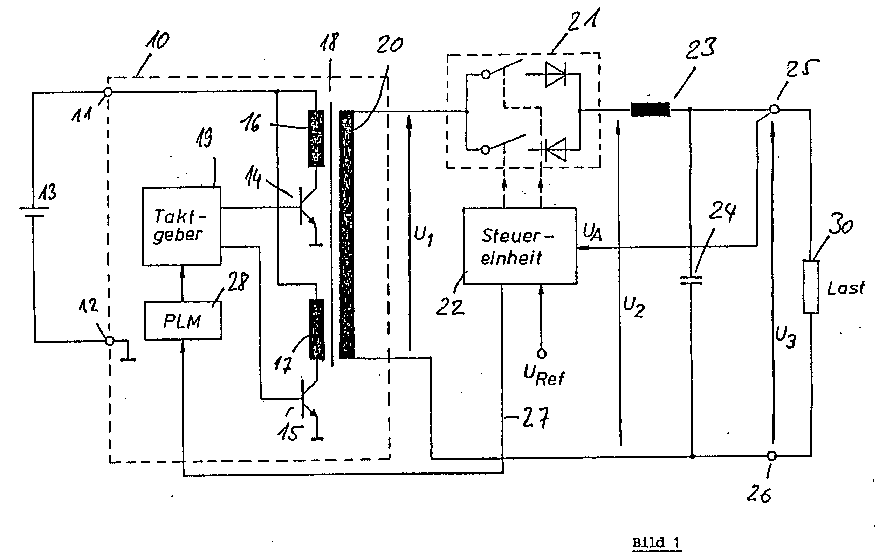

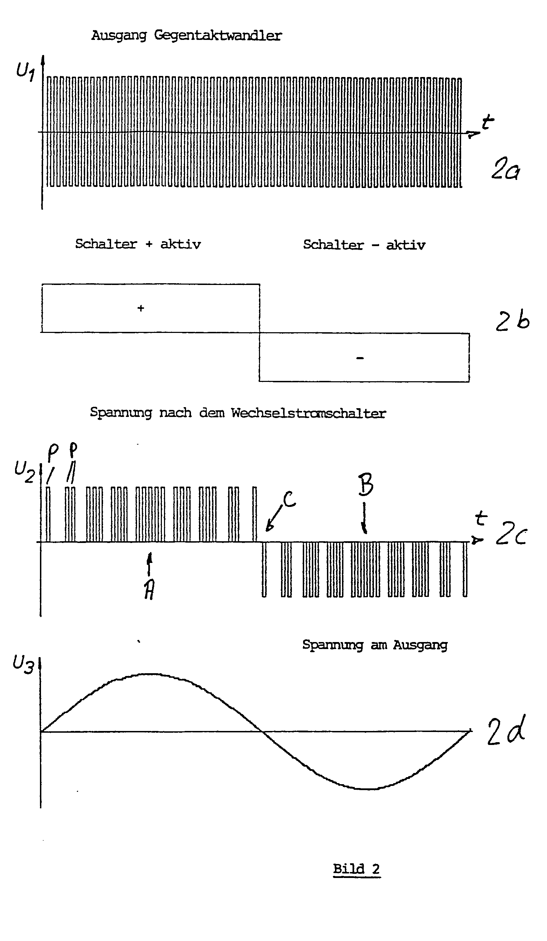

Der Wechselrichter gemäß Figur 1 besitzt einen Gegentaktwandler 10, dessen Ausgangsklemmen 11 und 12 von einer Batterie 13 herkommende Gleichspannung zugeführt wird. Diese Gleichspannung wird mittels zweier Transistoren 14 und 15 über einen Teil 16 bzw. 17 der Primärwicklung eines Transformators 18 zugeführt, wobei die Basis der beiden Transistoren 14 und 15 von einem Taktgeber 19 angesteuert wird, der hochfrequente Steuerimpulse abgibt. Die auf der Sekundärseite 20 des Transformators 18 abzunehmende Sekundärspannung $U_1$ ist eine hochfrequente Rechteck-Wechselspannung. In Figur 2 erkennt man den Verlauf dieser hochfrequenten Rechteckwechselspannung im oberen Figur 2a, in dem über der Zeit t die Spannung $U_1$ aufgetragen ist. Diese Spannung $U_1$ wird einem Wechselstromschalter 21 zugeführt, der beispielsweise zwei Thyristormodule aufweist, die in Antiparallelschaltung betrieben werden. Der Wechselstromschalter ist dabei so ausgelegt, daß er entweder nur positive oder nur negative Anteile der Rechteck-Wechselspannung $U_1$ durchläßt. Mittels einer Steuereinheit 22 werden die Öffnungszeiten des Wechselstromschalters 21 gesteuert, wobei in der Steuereinheit eine Referenzspannung $U_{Ref}$ mit einer Ausgangsspannung $U_A$ (vergl. weiter unten) verglichen wird, dergestalt, daß der Wechselstromschalter nur eine der Referenzspannung bzw. der Vergleichsspannung entsprechende Anzahl von Impulsen durchläßt. Es wird in Figur 2, bei 2b angedeutet, daß der Wechselstromschalter 21 einmal plus-aktiv und zum anderen minus-aktiv sein kann, d.h., daß er dort, wo er plus-aktiv ist, lediglich die positiven Halbwellen und dort wo er minus-aktiv ist lediglich die negativen Halbwellen durchläßt.

Der Wechselstromschalter 21 wird also von der Steuereinheit so angesteuert, daß er eine Spannung $U_2$ durchläßt, die in Figur 2 unter 2c dargestellt ist. Die Spannung $U_2$ ist wieder über der Zeit t aufgetragen und man erkennt, daß z.B. zu Beginn der Zähldauer ein Impuls durchgelassen wird; danach ist eine Pause zu sehen und wiederum danach läßt der Wechselstromschalter zwei positive Impulse P durch. Nach einer kürzeren Pause werden drei Impulse durchgelassen, usw., bis im Bereich A insgesamt fünf Impulse durchgelassen werden. Danach reduziert sich die Anzahl der Impulse wieder auf eins und das Spiel, das bis jetzt im positiven Bereich abgelaufen ist, wiederholt sich im negativen Bereich. Natürlich ist die Zahl der Impulse von d zu erzeugenden Spannung abhängig. Im Figur 2c soll nur angedeutet werden, daß sich die Zahl der durchgelassenen Impulse ändern muß, von Beginn des Nulldurchgangs wenig Impulse, bei maximaler Amplitude bei A viele Impulse, eben entsprechend der zu erzeugenden sinusförmigen Spannungen. Eine Einschränkung der Erfindung soll diese Darstellung nicht bedeuten.

Die Spannung $U_2$ wird geglättet und gefiltert über ein L-C-Glied mit einer Induktivität 23 und einer Kapazität 24, wodurch an den Ausgangsklemmen des Wechselrichters 25 und 26 eine Ausgangsspannung $U_3$ anliegt, die der Sinusfunktion 2d in Figur 2 entspricht. Man erkennt hierbei auch, daß der Maximalwert der Spannung im Bereich A bzw. B liegt, also dort, wo die meisten Impulse durchgelassen werden. Der Nulldurchgang ist bei C (siehe 2C), wo links und rechts jeweils ein Puls- bzw. ein Minusimpuls durchgelassen wird.

Es ist vorhin angedeutet worden, daß die Steuereinheit die Ausgangsspannung $U_A$ mit der Referenzspannung $U_{Ref}$ vergleicht. Natürlich kann die Steuereinheit auch nur ausschließlich durch $U_{Ref}$ gesteuert werden. Eine optimalere Lösung bietet aber der Vergleich von $U_A$ mit $U_{Ref}$, insoweit, als dadurch eine noch genauere und exaktere Sinusfunktion erzeugt werden kann.

Eine zusätzliche Verbesserung des Regelverhaltens des Wechselrichters bringt folgende Maßnahme:

Man nimmt von der Steuereinheit ein Steuersignal ab und führt dieses über eine Leitung 27 einem Pulslängenmodulator 28 zu, der den Taktgeber 19 in Abhängigkeit von der Regelabweichung in seinen Schaltzeiten steuert. Nicht beeinflußt wird der Taktgeber in seiner Taktfrequenz. Die Frequenz, mit der der Transformator betrieben wird, ist die gleiche, lediglich die Pulslänge wird verändert, was insbesondere im Bereich des Nulldurchgangs der Sinusspannung von wesentlichem Vorteil ist. Dadurch wird nämlich vermieden, daß der Last im Bereich der Nahtdurchgänge zuviel Energie zugeführt wird, was dazu führen kann, daß die Sinusfunktion keine echte Sinusfunktion ist, sondern eine solche mit Zacken im Bereich der Nulldurchgänge.

Als Last 30 kann beispielsweise eine Leuchtstofflampe oder irgendein anderer Verbraucher verwendet werden, der mit 50 Hz betrieben wird.

Es besteht auch die Möglichkeit, die Steuereinheit als einen Mikroprozessor auszubilden. Dadurch können die Öffnungszeiten des Wechselstromschalters nach den Bedürfnissen der Praxis gesteuert werden. Beispielsweise kann anstatt einer 50-Hz-Frequenz ohne wesentliche Änderungen der einzelnen Komponenten (bis auf das Filter 23/24) eine 16-2/3-Hz-Ausgangsspannung oder eine mit höherer Frequenz erzeugt werden. Ein derartiger Mikroprozessor wäre darüberhinaus auch in der Lage, die Betriebsart des Wechselrichters zu steuern, so daß Fehler im Betrieb sofort erkannt und angezeigt werden können. Dadurch, daß über den Transformator 18 nur Hochfrequenzimpulse übertragen werden, können kleine und leichte Bauteile verwendet werden, Bauteile, die für Hochfrequenz geeignet sind und niederfrequente Bauelemente können vermieden werden. Dadurch wird die gesamte Schaltungsanordnung bzw. der gesamte Wechselrichter erheblich einfacher in seiner Ausgestaltung.

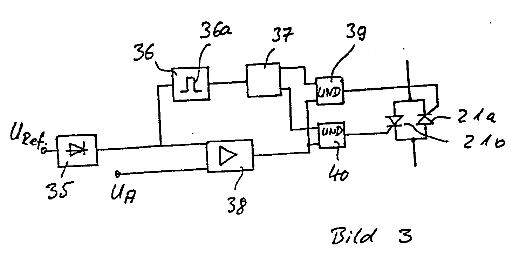

In Figur 3 ist eine Prinzipskizze einer Schaltungsanordnung dargestellt, wie die für die Steuereinheit 22 verwendet werden kann.

Als Sollwert $U_{Ref}$ wird bei Verwendung der Schaltungsanordnung für eine mit Sinuswechselspannung zu betreibende Last ebenfalls eine Sinuswechselspannung benötigt, die über eine Gleichrichterbrücke 35 in eine Sinushalbwellenspannung umgewandelt wird. Ein Schwellwertschalter 36 leitet darazs das Taktsignal 36a für ein Flip-Flop 37 ab, mit dem der Wechseltsromschalter 21, der gemäß Figur 3 aus zwei Thyristoren 21a, 21b in Antiparallelschaltung gebildet ist, d. h. also die Thyristoren 21, 21a, 21b im 10 ms-Abstand beim jeweiligen Spannungsnulldurchgang abwechselnd freigegeben wird bzw. werden. Eine Stelleinrichtung 38 vergleicht den Sollwert UR $_{Ref}$ mit dem Istwert der Ausgangsspannung $U_A$. Ist diese zu klein, so wird der jeweils zweite Eingang zweider UND-Gatter 39, 40 auf High-Pegel gelegt und der durch das Flip-Flop 37 freigegebene Thyristor wird angesteuert.

Dadurch gelangen die positiven oder negativen Pulse der Wandlerausgangsspannung $U_1$ an die Last 30 und zwar solange, bis die Ausgangsspannung den Sollwert erreicht. Von der Stelleinrichtung 38 wird dann jeweils ein UND-Gatter-Eingang auf Null gezogen und somit die Ansteuerung der Thyristoren 21a, 21b unterbunden.

Durch dieses Steuerverfahren gelangt die hochfrequente Wandlerspannung $U_1$ in Form von einzelnen Pulspaketen an die Last. Die Pulspaketdauer ist dabei abhängig von dem Augenblickswert der erforderlichen Wandlerausgangsspannung.

## Patentansprüche

1. Verfahren zum Betrieb eines Wechselrichters zur Erzeugung einer niederfrequenten Wechselspannung aus einer Gleichspannung, welche mittels eines Gegentaktwandlers in hochfrequente, eine Rechteckspannung bildende Impulse umgewandelt wird, dadurch gekennzeichnet, daß die Impulse der Rechteckspannung ($U_1$) einem von einer durch eine Referenzspannung ($U_{Ref}$) beeinflußten Steuereinheit (22) gesteuerten Wechselstromschalter (21) zugeführt wird, dessen Öffnungszeiten der Referenzspannung ($U_{Ref}$) entsprechend gesteuert werden, so daß eine der Referenzspannung ($U_{Ref}$) folgende Anzahl von Impulsen (P) der Rechteckspannung ($U_1$) zur Bildung der Ausgangsspannung ($U_3$) durchgelassen wird, wodurch erreicht wird, daß die Ausgangsspannung der Referenzspannung folgt, und daß die Ausgangsspannung des Gegentaktwandlers mittels einer Filteranordnung gefiltert und geglättet wird.

2. Verfahren nach Anspruch 1, dadurch gekennzeichnet, daß der Steuereinheit (22) zusätzlich die Ausgangsspannung ($U_3$) an der Last (30) zugeführt wird und daß in der Steuereinheit (22) die Ausgangsspannung ($U_3$) mit der Referenzspannung ($U_{Ref}$) verglichen und so die Öffnungszeiten des Wechselstromschalters (21) gesteuert werden.

3. Verfahren nach einem der vorigen Ansprüche, dadurch gekennzeichnet, daß als Wechselstromschalter (21) antiparallel geschaltete Thyristoren eingesetzt werden.

4. Verfahren nach einem der vorigen Ansprüche, daß die Steuereinheit (22) ein Signal abgibt, das über eine Pulslängenmodulationseinheit einem Taktgeber im Gegentaktwandler ansteuert.

5. Schaltungsanordnung zur Durchführung des Verfahrens nach einem der vorigen Ansprüche, mit einem Gegentaktwandler (18) dessen zwei Primärwicklungen (16, 17) mit dem Kolletor je eines von einem Taktgeber (19) angesteuerten Transistors (14, 15) in Reihe geschaltet ist, und an dessen Sekundärwicklung (20) eine Last (30) angeschlossen ist, dadurch gekennzeichnet, daß ein Anschluß der Sekundärwicklung (20) mit einem von einer Steuereinheit (22) ansteuerbaren Wechselstromschalter (21) verbunden ist.

6. Schaltungsanordnung zur Durchführung des Verfahrens nach einem der vorgen Ansprüche, dadurch gekennzeichnet, daß der Wechselstromschalter (21) zwei antiparallel geschaltete Thyristoren (21a, 21b) aufweist, deren Gate mit der Steuereinheit (22) verbunden ist.

## Revendications

1. Procédé d'exploitation d'un onduleur pour la génération, à partir d'une tension continue, d'une tension alternative à basse fréquence qui est convertie au moyen d'un convertisseur symétrique en impulsions à haute fréquence, formant une tension rectangulaire, caractérisé par le fait que les impulsions de la tension rectangulaire ($U_1$) sont envoyées à un interrupteur (21) à courant alternatif, commandé par une unité de commande (22) qui est influencée par une tension de référence ($U_{Ref}$) et dont les temps d'ouverture sont commandés en fonction de la tension de référence ($U_{Ref}$), de sorte qu'il laisse passer un nombre (P) d'impulsions de la tension rectangulaire ($U_1$) correspondant à la tension de référence ($U_{Ref}$), en vue de la formation de la tension de sortie ($U_3$), ce qui permet d'obtenir que la tension de sortie soit fonction de la tension de référence, et que la tension de sortie du convertisseur symétrique est filtrée et lissée au moyen d'un agencement de filtre.

2. Procédé selon la revendication 1, caractérisé par le fait qu'en plus la tension de sortie ($U_3$) sur la charge (30) est appliquée à l'unité de commande (22) et que dans l'unité de commande (22), la tension de sortie ($U_3$) est comparée avec la tension de référence ($U_{Ref}$) pour commander ainsi les temps d'ouverture de l'interrupteur (21) à courant alternatif.

3. Procédé selon l'une quelconque des revendications précédentes, caractérisé par le fait que des thyristors montés tête-bêche sont utilisés en tant qu'interrupteurs (21) à courant alternatif.

4. Procédé selon l'une quelconque des revendications précédentes, caractérisé par le fait l'unité de commande (22) émet un signal qui commande, par une unité de modulation de longueurs d'impulsions, une horloge dans le convertisseur symétrique.

5. Montage pour la mise en oeuvre du procédé selon l'une quelconque des revendications précédentes, comprenant un transformateur symétrique (18) dont les deux enroulements primaires (16, 17) sont montés en série chaque fois avec le collecteur d'un transistor (14, 15) commandé par une horloge (19) et dont l'enroulement secondaire (20) est connecté à une charge (30), caractérisé par le fait qu'une borne de l'enroulement secondaire (20) est reliée à un interrupteur (21) à courant alternatif commandé par une unité de commande (22).

6. Montage pour la mise en oeuvre du procédé selon l'une quelconque des revendications précédentes, caractérisé par le fait que l'interrupteur (21) à courant alternatif présente deux thyristors (21a, 21b) montés tête-bêche, dont les gâchettes sont reliées à l'unité de commande (22).

**Claims**

1. Method of operating an inverter to generate a low-frequency alternating voltage from a direct voltage that is transformed by means of a push-pull transformer into high-frequency pulses forming a square-wave voltage, characterized in that the pulses of the square-wave voltage ($U_1$) are fed to an alternating current circuit-breaker (21) controlled by a control unit (22) influenced by a reference voltage ($U_{Ref}$), the opening times of which alternating current circuit-breaker are controlled in accordance with the reference voltage ($U_{Ref}$), so that a number of pulses (P) of the square-wave voltage ($U_1$), which number follows the reference voltage ($U_{Ref}$), is passed to form the output voltage ($U_3$), whereby it is achieved that the output voltage follows the reference voltage, and that the output voltage of the push-pull transformer is filtered and smoothed by means of a filter arrangement.

2. Method according to Claim 1, characterized in that, additionally, the output voltage ($U_3$) at the load (30) is fed to the control unit (22), and in that in the control unit (22) the output voltage ($U_3$) is compared with the reference voltage ($U_{Ref}$), and in this way the opening times of the alternating current circuit-breaker (21) are controlled.

3. Method according to one of the preceding claims, characterized in that thyristors connected antiparallel are used as alternating current circuit-breaker (21).

4. Method according to one of the preceding claims, characterized in that the control unit (22) transmits a signal that drives a clock-pulse generator in the push-pull transformer via a pulse-duration modulation unit.

5. Circuit arrangement for carrying out the method according to one of the preceding claims, comprising a push-pull transformer (18) whose two primary windings (16, 17) are connected in series in each case to the collector of a transistor (14, 15) driven by a clock-pulse generator (19), and to whose secondary winding (20) a load (30) is connected, characterized in that one terminal of the secondary winding (20) is connected to an alternating current circuit-breaker (21) that can be driven by a control unit (22).

6. Circuit arrangement for carrying out the method according to one of the preceding claims, characterized in that the alternating current circuit-breaker (21) has two thyristors (21a, 21b) connected antiparallel, whose gate is connected to the control unit (22).

10 18 20 21 23 25

11

13

19 16

14 $U_1$

Takt- geber Steuer- einheit $U_A$ 24 30

28 22 $U_2$ Last

12 PLM

17 $U_{Ref}$ $U_3$

15

27 26

Bild 1

EP 0 180 967 B1

Ausgang Gegentaktwandler

2a

Schalter + aktiv                    Schalter – aktiv

2b

Spannung nach dem Wechselstromschalter

2c

Spannung am Ausgang

2d

Bild 2

2

Bild  3